(19) Europäisches Patentamt
European Patent Office
Office européen des brevets

(11) **EP 3 760 986 B1**

(12) **EUROPEAN PATENT SPECIFICATION**

(45) Date of publication and mention
of the grant of the patent:
**03.05.2023 Bulletin 2023/18**

(21) Application number: **20184116.0**

(22) Date of filing: **06.07.2020**

(51) International Patent Classification (IPC):
**G01G 19/08** *(2006.01)*    **G01G 23/00** *(2006.01)*

(52) Cooperative Patent Classification (CPC):
**G01G 19/086; G01G 23/002**

(54) **METHOD FOR ESTIMATING THE MASS OF AN OFF ROAD VEHICLE AND A RELATED OFF-ROAD VEHICLE**

VERFAHREN ZUR SCHÄTZUNG DER MASSE EINES GELÄNDEFAHRZEUGS UND ZUGEHÖRIGES GELÄNDEFAHRZEUG

PROCÉDÉ D'ÉVALUATION DU POIDS D'UN VÉHICULE TOUT-TERRAIN ET VÉHICULE TOUT-TERRAIN ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.07.2019 IT 201900011001**

(43) Date of publication of application:
**06.01.2021 Bulletin 2021/01**

(73) Proprietor: **CNH Industrial Italia S.p.A.**
**10135 Torino (IT)**

(72) Inventors:
• **PIROLA, Carlo Giovanni**
**4020 Linz (AT)**
• **WEINDL, Stefan**
**4600 Wels (AT)**

(74) Representative: **CNH Industrial IP Department**
**Leon Claeysstraat 3A**
**8210 Zedelgem (BE)**

(56) References cited:
**US-A1- 2013 054 107    US-A1- 2014 156 222**
**US-B1- 6 614 343**

**Description**

TECHNICAL FIELD

The present invention concerns a method for estimating the mass of an off-road vehicle and a related off-road vehicle. In particular, reference is made to an agricultural vehicle, such as a tractor.

BACKGROUND OF THE INVENTION

Knowledge of the mass of an off-road vehicle, such as an agricultural vehicle (*e.g.*, a tractor), is important for electronic logic systems and components (for example, the automatic transmission logic or the pneumatic trailer stabilization system) of the off-road vehicle so as to perform different operations, such as braking or activating the suspensions.

In particular, mass estimation of a vehicle, e.g. a passenger vehicle, is a well-known procedure in the automotive industry; in detail, the estimation is performed by means of dynamic equations of the vehicle, wherein an acceleration signal is used to derive the mass of the vehicle.

However, it is not possible to apply the abovementioned acceleration based estimation to off-road vehicles.

In fact, the acceleration signal of an off-road vehicle is too noisy and low compared to the over-dynamic signals; for instance, the wheels of the off-road vehicle generate vibrations that deeply affect the normal acceleration signal, as opposed to the case of the abovementioned passenger vehicle. US2013054107 discloses a system for calculating a first mass value indicative of a first mass of a vehicle wherein the vehicle has a vehicle interface capable of providing fuel data indicative of a rate at which fuel is being consumed by an engine of the vehicle at each point in time. US2014156222 discloses a method and a system for estimating a weight of a vehicle on the basis of at least two forces which act upon the vehicle.

Therefore, the need is felt to provide a method which allows to precisely estimate the mass of an off-road vehicle, in particular an agricultural vehicle such as a tractor.

An aim of the present invention is to satisfy the above mentioned needs, in particular in a cost effective way.

SUMMARY OF THE INVENTION

The aforementioned aim is reached by a method for estimating the mass of an off-road vehicle and a related off-road vehicle, as claimed in the appended set of claims.

BRIEF DESCRIPTION OF DRAWINGS

For a better understanding of the present invention, a preferred embodiment is described in the following, by way of a non-limiting example, with reference to the attached drawings wherein:

- Figure 1 is a schematic view of an off-road vehicle;
- Figure 2 is a schematic view of an electronic control unit (ECU) of an off-road vehicle; and
- Figure 3 is a flow chart of the present method for estimating the mass of an off-road vehicle.

DETAILED DESCRIPTION OF THE INVENTION

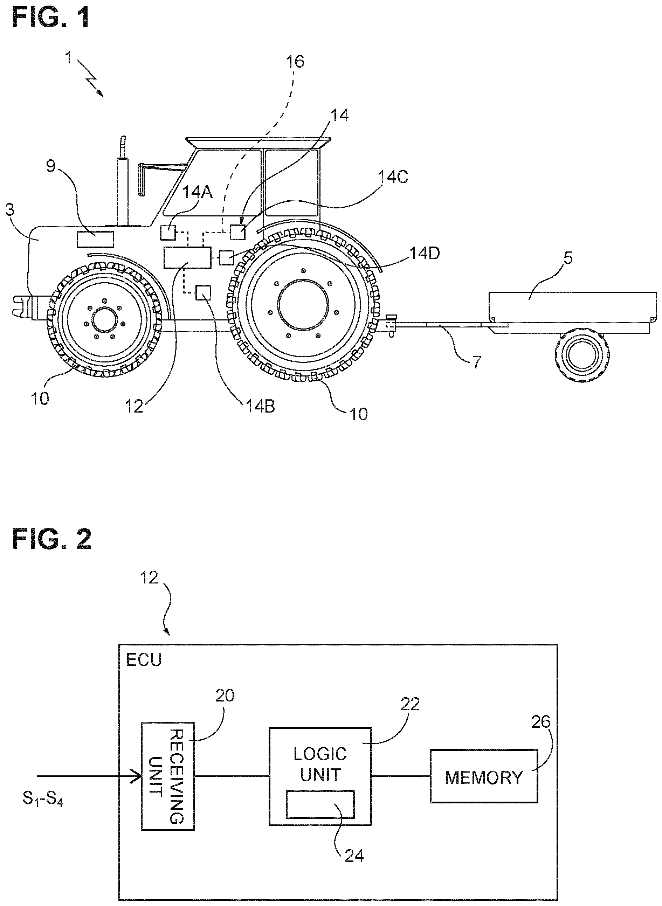

Figure 1 shows an off-road vehicle 1, in particular an agricultural vehicle, *e.g.* a tractor; in particular, the off-road vehicle 1 of Figure 1 is hereinafter referred to as tractor 1, without it being limiting to the scope of the invention.

The tractor 1 comprises a main vehicle 3 and a trailer 5, connected to the main vehicle 3 through connecting means 7. In particular, the main vehicle 3 comprises a combustion engine 9, coupled to a plurality of wheels 10 and configured to drive the tractor 1 when in use.

The main vehicle 3 also comprises an electronic control unit (ECU) 10, connected to a plurality of sensors 14 through a network 16, for example a CAN-type network.

In particular, the plurality of sensors 14 comprises a first, a second, a third and a fourth sensor 14A-14D, configured to respectively detect a velocity v of the tractor vehicle 1 when driven by the combustion engine 9; a slope angle $\alpha$, *i.e.* the inclination of the plane on which the tractor 1 moves; and engine quantities, in particular an engine torque $M_{eng}$ and an engine velocity $\omega_{eng}$, when the combustion engine 9 drives the tractor 1.

In further detail, the velocity v, the slope angle $\alpha$ and the engine quantities $M_{eng}$, $\omega_{eng}$ are time dependent; therefore, the sensors 14A-14D are configured to detect the velocity v, the slope angle $\alpha$ and the engine quantities $M_{eng}$, $\omega_{eng}$ in time according to a sampling frequency $f_s$.

Furthermore, the sensors 14A-14D are configured to generate a first, a second, a third and a fourth detection signal $S_1$-$S_4$, which are indicative of the velocity v, the slope angle $\alpha$ and the engine quantities $M_{eng}$, $\omega_{eng}$, respectively.

In particular, the detection signals $S_1$-$S_4$ are generated according to the sampling frequency $f_s$; thus, the detection signals $S_1$-$S_4$ at different instants in time (determined according to the sampling frequency $f_s$) are indicative of the values of the velocity v, the slope angle $\alpha$ and the engine quantities $M_{eng}$, $\omega_{eng}$ in said different instants.

After detecting the abovementioned velocity v, slope angle $\alpha$ and engine quantities $M_{eng}$, $\omega_{eng}$, each

sensor 14A-14D transmits the respective detection signal $S_1$-$S_4$ to the ECU 10 by means of a respective connection of the network 16 to the ECU 10; in particular, in case the network 16 is a CAN-type network, the detection signals $S_1$-$S_4$ are transmitted as CAN messages.

As shown in Figure 2, the ECU 10 comprises a receiving unit 20, configured to receive the detection signals $S_1$-$S_4$ outputted from the sensors 14A-14D.

The ECU 10 further comprises a logic unit 22, coupled to the receiving unit 20, configured to receive the detection signals $S_1$-$S_4$ from the receiving unit 20 and to process them to both extract the velocity v, slope angle $\alpha$ and engine quantities $M_{eng}$, $\omega_{eng}$ and to determine a first and a second power quantity $P_{eng}$, $P_{losses}$, according to known physical relations and which are time dependent.

In detail, the first power quantity $P_{eng}$ is the power supplied by the combustion engine 9 when in use and, thus, depends from the values of engine quantities $M_{eng}$, $\omega_{eng}$. In addition, the second power quantity $P_{losses}$ is the power lost by the tractor 1 when driven by the combustion engine 9 and depends at least on the value of velocity v and the value of slope angle $\alpha$.

Furthermore, as is known, the integral over time of the first and second power quantity $P_{eng}$, $P_{losses}$ is equal to a first and, respectively, a second energy quantity $E_{eng}$, $E_{losses}$. In particular, the first energy quantity $E_{eng}$ is the energy accumulated by the combustion engine 9 when in use; in addition, the second energy quantity $E_{losses}$ is the energy lost by the tractor 1 when driven by the combustion engine 9, for instance all the energy lost by friction of mechanical elements of the transmission or by wheel contacting the road or yet the energy dissipated against wind.

Furthermore, the logic unit 22 processes the detection signals $S_1$-$S_4$ to determine a kinetic energy $E_k$ and a potential energy $E_p$ of the tractor 1; in particular, the potential energy $E_p$ is a gravitational potential energy, defined, as is known, as the product between the gravitational acceleration g and a height difference $\Delta h$. In further detail, the height h is the height of the plane on which the tractor 1 moves with respect to a reference plane, perpendicular to a perpendicular line passing through the center of the Earth. In addition, the height difference $\Delta h$ is defined as the product between a variation of the velocity v of the tractor 1 and a variation of the slope angle $\alpha$ and is time dependent.

The logic unit 22 comprises a plurality of integrators 24 configured to process the power quantities $P_{eng}$, $P_{losses}$, the kinetic energy $E_k$ and the potential energy $E_p$ to determine the mass m of the tractor 1.

In detail, the mass m is determined under the energy conservation law applied to the tractor 1, *i.e.* in mathematical terms (equation 1):

$$E_{eng} = E_k + E_p + E_{losses}$$

Wherein, $E_{eng}$ is the first energy quantity, i.e. energy provided by the engine, $E_k$ is the kinetic energy of the tractor 1, $E_p$ is the potential energy of the tractor 1 and $E_{losses}$, i.e. the second energy quantity, represents all lost energy of the tractor 1, as disclosed above.

Therefore, explicating all quantities in function of the torque of the vehicle, the following equation (equation 2) may be found:

$$m = \frac{E_{eng} - E_{losses}}{\frac{\Delta v^2}{2} + g\Delta h}$$

Wherein, energy provided by the engine may be calculated in any known way, e.g. by knowing rotational velocity and mass of the engine, or by other equivalent method. Clearly, second energy quantity may comprises, as not, quantities which are dependent on the mass, e.g. drag or roll; therefore, the above shown exemplarily equation should be modified accordingly. For instance, such quantity may be calculated as proportional to friction coefficients and course of the tractor 1 or proportional to drag coefficients and the velocity of tractor 1, as known in the art

Considering a time interval $t_{ab}$, defined as the elapsed time from a first instant $t_a$ to a second instant $t_b$, the latter successive to the first instant $t_a$, the mass m of the tractor 1 is determined according to the following expression (equation 3)

$$m = \frac{\int_a^b P_{eng}\,dt - \int_a^b P_{losses}\,dt}{\frac{v_b^2 - v_a^2}{2} + g\int_a^b v\alpha\,dt}$$

wherein $v_a$, $v_b$ are the velocities at the first and, respectively, the second instant $t_a$, $t_b$ of tractor 1.

As can be seen, energy quantities $E_{eng}$, $E_{losses}$ are derived thanks to the plurality of integrators 24 configured to integrate the power quantities $P_{eng}$, $P_{losses}$. Similarly, they are configured to calculate the height in an approximate way by integrating over time the velocity v and the slope angle $\alpha$.

Furthermore, the ECU 10 comprises a memory 26, coupled to the logic unit 22 and configured to receive and store the values of the velocity v (*e.g.*, $v_a$ and $v_b$), the values of the instants (*e.g.*, $t_a$ and $t_b$), as well as the calculated mass m, thereby forming a history in the memory 26.

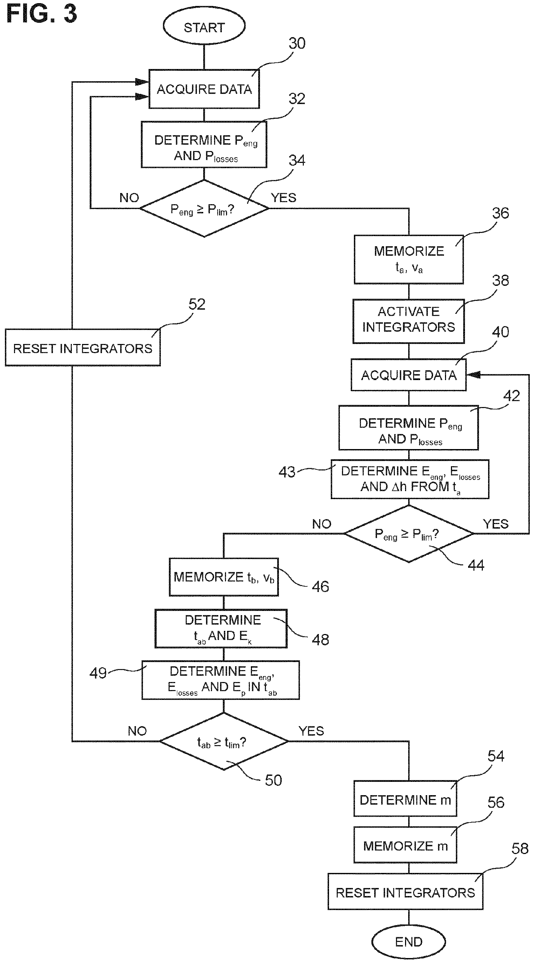

In use, the combustion engine 9, activated by a user, drives the main vehicle 3. Then, each sensor 14A-14D detects the velocity v, the slope angle $\alpha$ and the engine quantities $M_{eng}$, $\omega_{eng}$ and generates the corresponding detection signal $S_1$-$S_4$; then, the detection signals $S_1$-$S_4$ are transmitted to the ECU 10 and processed according to the method shown in Figure 3 and described hereinafter. In particular, reference is made to a single iteration, in particular in the time interval $t_{ab}$, of the present method, without it being limiting to the present invention.

In particular, block 30, the receiving unit 20 receives the detection signals $S_1$-$S_4$ at the first instant $t_a$ (hereinafter referred to as first detection signals $S_{1,a}$-$S_{4,a}$), which are indicative of first values of the velocity v (hereinafter referred to as $v_a$), the slope angle $\alpha$ (hereinafter referred to as $\alpha_a$) and the engine quantities $M_{eng}$, $\omega_{eng}$ (hereinafter referred to a $M_{eng,a}$, $\omega_{eng,a}$), and transmits them to the logic unit 22 for processing; in particular, it is assumed that the logic unit 22 receives the first detection signals $S_{1,a}$-$S_{4,a}$ at the same first instant $t_a$, i.e. there is no delay in the transmission between the receiving unit 20 and the logic unit 22. Furthermore, it is assumed that the delay in transmitting the first detection signals $S_{1,a}$-$S_{4,a}$ from the sensors 14A-14D to the ECU 10 is negligible, i.e. the first detection signals $S_{1,a}$-$S_{4,a}$ are generated at the first instant $t_a$.

Then, block 32, the first detection signals $S_{1,a}$-$S_{4,a}$ are processed by the logic unit 22 to determine the velocity $v_a$, of the slope angle $\alpha_a$ and of the engine quantities $M_{eng,a}$, $\omega_{eng,a}$ and the first and the second power quantity $P_{eng}$, $P_{losses}$ at the first instant $t_a$ (hereinafter referred to as first values of the first and second power quantity $P_{eng,a}$, $P_{losses,a}$, respectively).

The logic unit 22 then verifies that a first condition is satisfied, in particular if the first value of the first power quantity $P_{eng,a}$ is greater than or equal to a threshold power quantity $P_{lim}$, (decision block 34); in detail, the threshold power quantity $P_{lim}$ is a predetermined value memorized in the memory 26.

If the first value of the first power quantity $P_{eng,a}$ is lower than the threshold power quantity $P_{lim}$, the logic unit 22 determines that the first condition is not satisfied; therefore, the logic unit 22 determines that the steps described with reference to blocks 30-32 have to be repeated until the first value of the first power quantity $P_{eng,a}$ is not greater or equal to the threshold power quantity $P_{lim}$.

If the first value of the first power quantity $P_{eng,a}$ is greater or equal than the threshold power quantity $P_{lim}$, the logic unit 22 determines that the first condition is satisfied; therefore, the logic unit 22 stores the first value of the velocity $v_a$ and the associated first instant $t_a$ (block 36). Then, the logic unit 22 activates the plurality of integrators 24 (block 38) at the same first instant $t_a$.

Then, at block 40, the receiving unit 20 receives once again the detection signals $S_1$-$S_4$, in particular at the second instant $t_b$, and transmits them to the logic unit 22 for processing; in detail, hereinafter the signals $S_1$-$S_4$ received at the second instant $t_b$ are referred to as second detection signals $S_{1,b}$-$S_{4,b}$ and they are indicative of second values of the velocity v (hereinafter referred to as $v_b$), the slope angle $\alpha$ (hereinafter referred to as $\alpha_b$) and the engine quantities $M_{eng}$, $\omega_{eng}$ (hereinafter referred to as $M_{eng,b}$, $\omega_{eng,b}$).

In particular, it is assumed that the logic unit 22 receives the second detection signals $S_{1,b}$-$S_{4,b}$ at the same second instant $t_b$, i.e. there is no delay in the transmission between the receiving unit 20 and the logic unit 22. In addition, it is assumed that the delay in transmitting the second detection signals $S_{1,b}$-$S_{4,b}$ from the sensors 14A-14D to the ECU 10 is negligible, i.e. the second detection signals $S_{1,b}$-$S_{4,b}$ are generated at the second instant $t_b$.

Then, block 42, the second detection signals $S_{1,b}$-$S_{4,b}$ are processed by the logic unit 22 to determine the second value of the velocity $v_b$, of the slope angle $\alpha_b$ and of the engine quantities $M_{eng,b}$, $\omega_{eng,b}$ and the first and the second power quantity $P_{eng}$, $P_{losses}$ at the second instant $t_b$ (hereinafter referred to as second values of the first and the second power quantity $P_{eng,b}$, $P_{losses,b}$, respectively).

Then, the logic unit 22 determines the energy quantities $E_{eng}$, $E_{losses}$ and the height difference $\Delta h$ starting from the first instant $t_a$ (block 43); in particular, the plurality of integrators 24 sum up the values of the power quantities $P_{eng}$, $P_{losses}$ starting from when they were activated (i.e., the first instant $t_a$). The same procedure is carried out for the height difference $\Delta h$, which is determined by summing up the values of the product between the variation of the velocity v and the variation of the slope angle $\alpha$ from the first time instant $t_a$ up to the second time instant $t_b$.

The logic unit 22 then verifies if the first condition is satisfied, i.e. if the second value of the first power quantity $P_{eng,b}$ is greater than or equal to the threshold power quantity $P_{lim}$ (decision block 44).

If the second value of the first power quantity $P_{eng,b}$ is greater or equal than the threshold power quantity $P_{lim}$, the logic unit 22 determines that the first condition is still satisfied at the second instant $t_b$; therefore, the logic unit 22 determines that the steps described with reference to blocks 40-43 have to be repeated at instants successive to the second instant $t_b$ as long as the condition of block 44 is no more satisfied. In further detail, whenever a cycle formed by the steps described with reference to blocks 40-43 is repeated (i.e., at each instant successive to the second instant $t_b$ wherein the first condition is satisfied), each value of the velocity v corresponding to the value of the first power quantity $P_{eng}$ determined in each cycle and which satisfies the first condition is stored in the memory 26. Furthermore, the energy quantities $E_{eng}$, $E_{losses}$ and the height difference $\Delta h$ determined at each cycle is added to the respective values of the energy quantities $E_{eng}$, $E_{losses}$ and the height difference $\Delta h$ of the previous cycle.

If the second value of the first power quantity $P_{eng,b}$ is lower than the threshold power quantity $P_{lim}$, the logic unit 22 determines that the first condition is not satisfied, i.e. the second value of the first power quantity $P_{eng,b}$ has dropped below the threshold power quantity $P_{lim}$; therefore, the logic unit 22 stores the second values of the velocity $v_b$ corresponding to the second values of the first power quantity $P_{eng,b}$ that did not satisfy the first condition, and the corresponding second instant $t_b$ in the memory 26 (block 46).

In particular, the second value of the first power quantity $P_{eng,b}$ that did not satisfy the first condition corresponds to a second value of the velocity $v_b$ which is the last value that is stored by the memory 26 in the iteration of the method of Figure 3 (hereinafter referred to as the last value of the velocity $v_b$); in other words, the last value of the first power quantity $P_{eng,b}$ is the value that stops the cycle formed by the steps described with reference to blocks 40-43. Thus, once the first condition is not satisfied anymore, the memory 26 has stored series of the velocity v of the tractor 1 when driven by the combustion engine 9; in particular, the series of the velocity v comprises the first value of the velocity $v_a$ up until the last value of the velocity $v_b$.

Then, block 48, the logic unit 22 determines the time interval $t_{ab}$ by subtracting the value of the first instant $t_a$ from the value of the second instant $t_b$, namely the time interval ($t_{ab}$) is the time elapsed between the first and the second instant; in addition, the logic unit 22 determines the kinetic energy $E_k$ from the first and last values of the velocity $v_a$, $v_b$ as according to equation 3.

After determining the time interval $t_{ab}$ and the kinetic energy $E_k$, block 49, the logic unit 22 (in particular, the plurality of integrators 24) determines the energy quantities $E_{eng}$, $E_{losses}$ and the potential energy $E_p$ in the time interval $t_{ab}$; in particular, the energy quantities $E_{eng}$, $E_{losses}$ are determined as the sum of the values of the series of energy quantities $E_{eng}$, $E_{losses}$ in the time interval $t_{ab}$. Furthermore, for determining the potential energy $E_p$, the logic unit 22 determines the height difference $\Delta h$ in the time interval $t_{ab}$.

Then, the logic unit 22 verifies that a second condition is satisfied, in particular if the time interval $t_{ab}$ is greater than or equal to a threshold time interval $t_{lim}$ (decision block 50); in detail, the threshold time interval $t_{lim}$ is a predetermined value memorized in the memory 26.

If the time interval $t_{ab}$ is lower than the threshold time interval $t_{lim}$, the logic unit 22 determines that the second condition is not satisfied; therefore, the logic unit 22 determines that the time interval $t_{ab}$ is not sufficiently long for the plurality of integrators 24 to accurately determine the mass m of the main vehicle 3 according to equation 3. Therefore, block 52, the plurality of integrators 24 is therefore reset and the method is repeated from block 30.

If the time interval $t_{ab}$ is greater than or equal to the threshold time interval $t_{lim}$, the logic unit 22 determines that the second condition is satisfied; therefore, the logic unit 22 determines that the time interval $t_{ab}$ is sufficiently long for the plurality of integrators 24 to accurately determine the mass m of the main vehicle 3 as according to equation 3 in the time interval $t_{ab}$ (block 54) .

Then, block 56, the mass m of the main vehicle 3 is stored in the memory 26 and, finally, the plurality of integrators 24 is reset (block 58). The method is run as long as the combustion engine 9 drives the tractor 1; in particular, the values of the mass m of the main vehicle 3 are stored in the memory 26 each time the estimation is carried out.

In view of the foregoing, the advantages of the present system and method thereof according to the invention are apparent.

In particular, the present method allows to precisely estimate the mass m of the tractor 1 without using its dynamic equations, rather using energy values which are substantially insensitive about acceleration noises.

In fact, the integration of the series of the power quantities $P_{eng}$, $P_{losses}$ over a sufficiently large time interval $t_{ab}$ allows to determine a mean value for the mass m, thus significantly reducing the noise due to, for example, the vibrations of the plurality of wheels 10 of the tractor 1. In other words, the present method gives a reliable estimation of the mass m of the tractor 1 in a simple and economic way, by using quantities related to engine and vehicle operation which are already at disposal of a common control unit of the vehicle.

It is clear that modifications can be made to the described system and method thereof which do not extend beyond the scope of protection defined by the claims.

**Claims**

1. Method for estimating a mass (m) of an off-road vehicle (1) comprising:

   acquiring (30, 40) detection signals ($S_{1,a}$-$S_{4,a}$, $S_{1,b}$-$S_{4,b}$) from a plurality of sensors (14, 14A-14D), the detection signals being indicative of a velocity ($v_a$, $v_b$), a slope angle ($\alpha_a$, $\alpha_b$) and engine quantities ($M_{eng,a}$, $\omega_{eng,a}$, $M_{eng,b}$, $\omega_{eng,b}$), the velocity, the slope angle and the engine quantities being measured during the movement of the off-road vehicle;
   processing (32, 42) the detection signals to determine derived quantities ($E_{eng}$, $E_{losses}$, $E_k$, $E_p$) comprising processing the engine quantities to obtain a first value of a first power quantity ($P_{eng,a}$); and
   processing the velocity and the slope angle to obtain a first value of the second power quantity ($P_{losses,a}$);
   processing (34, 44-48) the derived quantities comprising verifying (34) whether the first value of the first power quantity ($P_{eng,a}$) satisfies a first condition and comparing (34) the first value of the first power quantity with a threshold power quantity ($P_{lim}$);
   verifying (34) that the first value of the first power quantity is greater than or equal to the threshold power quantity ($P_{lim}$); and
   repeating the steps of:

acquiring (30) the detection signals $(S_{1,a}-S_{4,a})$;

processing the engine quantities to obtain the first value of a first power quantity $(P_{eng,a})$;

processing the velocity and the slope angle to obtain the first value of the second power quantity $(P_{losses, a})$;

comparing (34) the first value of the first power quantity with the threshold power quantity $(P_{lim})$; and

verifying (34) that the first value of the first power quantity is greater than or equal to the threshold power quantity $(P_{lim})$,

until the first value of the first power quantity is greater than or equal to the threshold power quantity;

determining (54) the mass of the off-road vehicle from the derived quantities; and

storing (56) the mass of the off-road vehicle in a memory,

wherein the derived quantities are energy quantities $(E_{eng}, E_{losses}, E_k , E_p )$.

2. - Method according to claim 1, wherein said energy quantities comprises a first and a second energy quantity related to engine $(E_{eng}, E_{losses})$, a kinetic energy $(E_k)$ and a potential energy $(E_p)$ of the off-road vehicle (1) .

3. A method according to claim 1, wherein, if the first value of the first power quantity $(P_{eng,a})$ is greater than or equal to the threshold power quantity $(P_{lim})$, the method further comprises:

acquiring (40) further detection signals $(S_{1,b}-S_{4,b})$ from the plurality of sensors (14, 14A-14D), the further detection signals being indicative of a further values of the velocity $(v_b)$, of the slope angle $(\alpha_b)$ and of the engine quantities $(M_{eng,b}, \omega_{eng,b})$, the further values of the velocity, of the slope angle and of the engine quantities being measured during the movement of the off-road vehicle (1);

processing (42) the further engine quantities to obtain a further value of a first power quantity $(P_{eng,b})$;

processing (42) the further velocity and the further slope angle to obtain a further value of the second power quantity $(P_{losses,b})$;

determining (43) the first and a second energy quantity $(E_{eng}, E_{losses})$ from the first and further values of the first and, respectively, the second power quantity starting from the first instant;

determining (43) a height difference $(\Delta h)$ from the first and further values of the slope angle and of the velocity starting from the first instant;

and

verifying (44) whether the further value of the first power quantity $(P_{eng,b})$ satisfies the first condition.

4. A method according to claim 3, wherein verifying (34) whether the further value of the first power quantity $(P_{eng,b})$ satisfies the first condition comprises:

comparing (44) the further value of the first power quantity with a threshold power quantity $(P_{lim})$;

verifying (44) that the further value of the first power quantity is greater than the threshold power quantity $(P_{lim})$;

repeating the steps of:

acquiring (40) the further detection signals $(S_{1,b}-S_{4,b})$;

processing (42) the further engine quantities to obtain the further value of a first power quantity $(P_{eng,b})$;

processing (42) the further velocity and the further slope angle to obtain the further value of the second power quantity $(P_{losses,b})$;

determining (43) the first and a second energy quantity $(E_{eng}, E_{losses})$ from the first and further values of the first and, respectively, the second power quantity starting from the first instant;

determining (43) a height difference $(\Delta h)$ from the first and further values of the slope angle and the velocity starting from the first instant;

comparing (44) the further value of the first power quantity with the threshold power quantity $(P_{lim})$; and

verifying (44) that the further value of the first power quantity is greater than the threshold power quantity $(P_{lim})$,

until the further value of the first power quantity is lower than the threshold power quantity.

5. A method according to claim 4, further comprising storing the first and further values of the velocity to determine a series of values of velocity if the further value of the first power quantity is lower than the threshold power quantity.

6. A method according any of claims 1 to 5, wherein verifying (34) that the first value of the first power quantity $(P_{eng,a})$ is greater than the threshold power quantity is performed at a first instant $(t_a)$, wherein verifying that the further value of the first power quantity is lower than the threshold power quantity is performed at a second instant $(t_b)$, successive to the first instant, the first and second instant being stored in the memory (26) ; and wherein the method further comprises:

acquiring (48) a time interval ($t_{ab}$) as a time elapsed between the first and the second instant;

determining (48) the kinetic energy ($E_k$) from the first and further values of the velocity in the time interval;

determining (49) the first and second energy quantity ($E_{eng}$, $E_{losses}$) and the height difference in the time interval; and

determining (49) the potential energy ($E_p$) from the height difference ($\Delta h$).

7. A method according to the claim 6, further comprising verifying (50) that the time interval ($t_{ab}$) satisfies a second condition.

8. A method according to the claim 7, wherein verifying (50) that the time interval ($t_{ab}$) satisfies a second condition comprises:

- comparing (50) the time interval with a threshold time interval ($t_{lim}$); and
- verifying (50) that the time interval is greater than the threshold time interval.

9. A method according to the claim 8, wherein the step of determining (54) the mass of the off-road vehicle comprises dividing the difference of the first and second energy quantity ($E_{eng}$, $E_{losses}$) to the sum of the kinetic energy ($E_k$) and the potential energy ($E_p$) determined in the time interval ($t_{ab}$).

10. An off-road vehicle (1) comprising:

- a combustion engine (9) configured to drive the off-road vehicle;
- a plurality of sensors (14, 14A-14D) configured to detect a velocity (v), a slope angle ($\alpha$) and engine quantities ($M_{eng}$, $\omega_{eng}$) and to generate respective detection signals ($S_1$-$S_4$), the velocity, the slope angle and the engine quantities being measured during the movement of the off-road vehicle when driven by the combustion engine; and
- an electronic control unit, ECU, (10) coupled to the plurality of sensors and comprising:

- receiving means (20) configured to receive the detection signals ($S_{1,\,a}$-$S_{4,\,a}$, $S_{1,\,b}$-$S_{4,\,b}$);
- first processing means (22) configured to process the detection signals to determine derived quantities ($E_{eng}$, $E_{losses}$, $E_k$, $E_p$,);
- second processing means (22) configured to process the derived quantities according to any one of the preceding claims;

- determination means (22) configured to determine a mass (m) of the off-road vehicle from the derived quantities; and
- a memory (26) configured to store the mass of the off-road vehicle.

**Patentansprüche**

1. Verfahren zur Schätzung einer Masse (m) eines Geländefahrzeugs (1), umfassend:

Erfassen (30, 40) von Erfassungssignalen ($S_{1,a}$-$S_{4,a}$, $S_{1,b}$-$S_{4,b}$) von einer Mehrzahl von Sensoren (14, 14A-14D), wobei die Erfassungssignale kennzeichnend für eine Geschwindigkeit ($v_a$, $v_b$), einen Steigungswinkel ($\alpha_a$, $\alpha_b$) und Motorgrößen ($M_{eng,a}$, $\omega_{eng,a}$, $M_{eng,b}$, $\omega_{eng,b}$) sind, wobei die Geschwindigkeit, der Steigungswinkel und die Motorgrößen während der Bewegung des Geländefahrzeugs gemessen werden;

Verarbeiten (32, 42) der Erfassungssignale zur Bestimmung der abgeleiteten Größen ($E_{eng}$, $E_{losses}$, $E_k$, $E_b$), umfassend das Verarbeiten der Motorgrößen, um einen ersten Wert einer ersten Leistungsgröße ($P_{eng,a}$) zu erhalten; und Verarbeiten der Geschwindigkeit und des Steigungswinkels, um einen ersten Wert der zweiten Leistungsgröße ($P_{losses,a}$) zu erhalten;

Verarbeiten (34, 44-48) der abgeleiteten Größen, umfassend ein Verifizieren (34), ob der erste Wert der ersten Leistungsgröße ($P_{eng,a}$) eine erste Bedingung erfüllt, und ein Vergleichen (34) des ersten Werts der ersten Leistungsgröße mit einem Leistungsgrößen-Grenzwert ($P_{lim}$);

Verifizieren (34), dass der erste Wert der ersten Leistungsgröße größer als der oder gleich dem Leistungsgrößen-Grenzwert ($P_{lim}$) ist; und

Wiederholen der Schritte:

Erfassen (30) der Erfassungssignale ($S_{1,a}$-$S_{4,a}$);

Verarbeiten der Motorgrößen, um einen ersten Wert einer ersten Leistungsgröße ($P_{eng,a}$) zu erhalten;

Verarbeiten der Geschwindigkeit und des Steigungswinkels, um den ersten Wert der zweiten Leistungsgröße ($P_{losses,a}$) zu erhalten;

Vergleichen (34) des ersten Werts der ersten Leistungsgröße mit dem Leistungsgrößen-Grenzwert ($P_{lim}$); und

Verifizieren (34), dass der erste Wert der ersten Leistungsgröße größer als der oder gleich dem Leistungsgrößen-Grenzwert ($P_{lim}$) ist,

bis der erste Wert der ersten Leistungsgröße größer als der oder gleich dem Leistungsgrößen-Grenzwert ist;

Bestimmen (54) der Masse des Geländefahrzeugs basierend auf den abgeleiteten Größen; und

Speichern (56) der Masse des Geländefahrzeugs in einer Speichereinrichtung, wobei die abgeleiteten Größen Energiegrößen ($E_{eng}$, $E_{losses}$, $E_k$, $E_p$) sind.

2. Verfahren nach Anspruch 1, wobei die Energiegrößen eine erste und eine zweite Energiegröße bezüglich des Motors ($E_{eng}$, $E_{losses}$), einer kinetischen Energie ($E_k$) und einer potentiellen Energie ($E_p$) des Geländefahrzeugs (1) umfassen.

3. Verfahren nach Anspruch 1, wobei, wenn der erste Wert der ersten Leistungsgröße ($P_{eng,a}$) größer als der oder gleich dem Leistungsgrößen-Grenzwert ($P_{lim}$) ist, das Verfahren des Weiteren umfasst:

Erfassen (40) weiterer Erfassungssignale ($S_{1,b}$-$S_{4,b}$) von der Mehrzahl von Sensoren (14, 14A-14D), wobei die weiteren Erfassungssignale kennzeichnend für weitere Werte der Geschwindigkeit ($v_b$), des Steigungswinkels ($\alpha_b$) und der Motorgrößen ($M_{eng,b}$, $\omega_{eng,b}$) sind, wobei die weiteren Werte der Geschwindigkeit, des Steigungswinkels und der Motorgrößen während der Bewegung des Geländefahrzeugs (1) gemessen werden;

Verarbeiten (42) der weiteren Motorgrößen, um einen weiteren Wert einer ersten Leistungsgröße ($P_{eng,b}$) zu erhalten;

Verarbeiten (42) der weiteren Geschwindigkeit und des weiteren Steigungswinkels, um einen weiteren Wert der zweiten Leistungsgröße ($P_{losses,b}$) zu erhalten;

Bestimmen (43) der ersten und einer zweiten Energiegröße ($E_{eng}$, $E_{losses}$) basierend auf den weiteren Werten der ersten und entsprechend der zweiten Leistungsgröße ab dem ersten Zeitpunkt;

Bestimmen (43) einer Höhendifferenz ($\Delta h$) basierend auf dem ersten und den weiteren Werten des Steigungswinkels und der Geschwindigkeit beginnend ab dem ersten Zeitpunkt; und

Verifizieren (44), ob der weitere Wert der ersten Leistungsgröße ($P_{eng,b}$) die erste Bedingung erfüllt.

4. Verfahren nach Anspruch 3, wobei das Verifizieren (34), ob der weitere Wert der ersten Leistungsgröße ($P_{eng,b}$) die erste Bedingung erfüllt, umfasst:

Vergleichen (44) des weiteren Werts der ersten Leistungsgröße mit einem Leistungsgrößen-Grenzwert ($P_{lim}$);

Verifizieren, dass der weitere Wert der ersten Leistungsgröße größer als der Leistungsgrößen-Grenzwert ($P_{lim}$) ist;

Wiederholen der Schritte:

Erfassen (40) der weiteren Erfassungssignale ($S_{1,b}$-$S_{4,b}$);

Verarbeiten (42) der weiteren Motorgrößen, um den weiteren Wert einer ersten Leistungsgröße ($P_{eng,b}$) zu erhalten;

Verarbeiten (42) der weiteren Geschwindigkeit und des weiteren Steigungswinkels, um den weiteren Wert der zweiten Leistungsgröße ($P_{losses,b}$) zu erhalten;

Bestimmen (43) der ersten und einer zweiten Energiegröße ($E_{eng}$, $E_{losses}$) basierend auf dem ersten und den weiteren Werten der ersten und entsprechend der zweiten Leistungsgröße ab dem ersten Zeitpunkt;

Bestimmen (43) einer Höhendifferenz ($\Delta h$) basierend auf dem ersten und den weiteren Werten des Steigungswinkels und der Geschwindigkeit ab dem ersten Zeitpunkt;

Vergleichen (44) des weiteren Werts der ersten Leistungsgröße mit dem Leistungsgrößen-Grenzwert ($P_{lim}$); und

Verifizieren (44), dass der weitere Wert der ersten Leistungsgröße größer als der Leistungsgrößen-Grenzwert ($P_{lim}$) ist,

bis der weitere Wert der ersten Leistungsgröße kleiner als der Leistungsgrößen-Grenzwert ist.

5. Verfahren nach Anspruch 4, das des Weiteren ein Speichern des ersten und der weiteren Werte der Geschwindigkeit umfasst, um eine Reihe von Werten der Geschwindigkeit zu bestimmen, wenn der weitere Wert der ersten Leistungsgröße kleiner als der Leistungsgrößen-Grenzwert ist.

6. Verfahren nach einem der Ansprüche 1 bis 5, wobei das Verifizieren (34), dass der erste Wert der ersten Leistungsgröße ($P_{eng,a}$) größer als der Leistungsgrößen-Grenzwert ist, zu einem ersten Zeitpunkt ($t_a$) durchgeführt wird, wobei das Verifizieren, dass der weitere Wert der ersten Leistungsgröße kleiner als der Leistungsgrößen-Grenzwert ist, zu einem zweiten Zeitpunkt ($t_b$) durchgeführt wird, nachfolgend zu dem ersten Zeitpunkt, wobei der erste und der zweite Zeitpunkt in der Speichereinrichtung (26) gespeichert werden; und wobei das Verfahren des Weiteren umfasst:

Erfassen (48) eines Zeitintervalls ($t_{ab}$) als eine abgelaufene Zeit zwischen dem ersten und dem zweiten Zeitpunkt;

Bestimmen (48) der kinetischen Energie ($E_k$) basierend auf dem ersten und den weiteren Werten der Geschwindigkeit in dem Zeitintervall;

Bestimmen (49) der ersten und der zweiten Energiegröße ($E_{eng}$, $E_{losses}$) und der Höhendifferenz in dem Zeitintervall; und

Bestimmen (49) der potentiellen Energie ($E_b$) basierend auf der Höhendifferenz ($\Delta h$).

7. Verfahren nach Anspruch 6, das des Weiteren ein Verifizieren (50), dass das Zeitintervall ($t_{ab}$) eine zweite Bedingung erfüllt, umfasst.

8. Verfahren nach Anspruch 7, wobei das Verifizieren (50), dass das Zeitintervall ($t_{ab}$) eine zweite Bedingung erfüllt, umfasst:

Vergleichen (50) des Zeitintervalls mit einem Zeitintervall-Grenzwert ($t_{lim}$); und

Verifizieren (50), dass das Zeitintervall größer als der Zeitintervall-Grenzwert ist.

9. Verfahren nach Anspruch 8, wobei der Schritt des Bestimmens (54) der Masse des Geländefahrzeugs eine Division der Differenz aus der ersten und der zweiten Energiegröße ($E_{eng}$, $E_{losses}$) durch die Summe aus der kinetischen Energie ($E_k$) und der potenziellen Energie ($E_b$), die in dem Zeitintervall ($t_{ab}$) bestimmt werden, umfasst.

10. Geländefahrzeug (1) mit:

einem Verbrennungsmotor (9), der dazu eingerichtet ist, das Geländefahrzeug anzutreiben;

einer Mehrzahl von Sensoren (14, 14A-14D), die dazu eingerichtet sind, eine Geschwindigkeit (v), einen Steigungswinkel ($\alpha$) und Motorgrößen ($M_{eng}$, $\omega_{eng}$) zu erfassen und entsprechende Erfassungssignale (S1-S4) zu erzeugen, wobei die Geschwindigkeit, der Steigungswinkel und die Motorgrößen während der Bewegung des Geländefahrzeugs, wenn dieses durch den Verbrennungsmotor angetrieben wird, gemessen werden; und

einer elektrischen Steuereinheit, ECU, (10), die mit der Mehrzahl von Sensoren gekoppelt ist und aufweist:

ein Empfangsmittel (20), das dazu eingerichtet ist, die Erfassungssignale ($S_{1,a}$-$S_{4,a}$, $S_{1,b}$-$S_{4,b}$) zu empfangen;

ein erstes Verarbeitungsmittel (22), das dazu eingerichtet ist, die Erfassungssignale zu verarbeiten, um abgeleitete Größen ($E_{eng}$, $E_{losses}$, $E_k$, $E_p$) zu bestimmen;

ein zweites Verarbeitungsmittel (22), das dazu eingerichtet ist, die abgeleiteten Größen nach einem der vorhergehenden Ansprüche zu verarbeiten;

ein Bestimmungsmittel (22), das dazu eingerichtet ist, eine Masse (m) des Geländefahrzeugs basierend auf den abgeleiteten Größen zu bestimmen; und

eine Speichereinrichtung (26), die dazu eingerichtet ist, die Masse des Geländefahrzeugs zu speichern.

**Revendications**

1. Procédé d'estimation d'une masse (m) d'un véhicule tout-terrain (1) comprenant les étapes consistant à :

acquérir (30, 40) des signaux de détection ($S_{1,a}$-$S_{4,a}$, $S_{1,b}$-$S_{4,b}$) à partir d'une pluralité de capteurs (14, 14A-14D), les signaux de détection étant indicatifs d'une vitesse ($v_a$, $v_b$), d'un angle de pente ($\alpha_a$, $\alpha_b$) et de quantités de moteur ($M_{eng,\,a}$, $\omega_{eng,\,a}$, $M_{eng,\,b}$, $\omega_{eng,\,b}$), la vitesse, l'angle de pente et les quantités de moteur étant mesurés pendant le mouvement du véhicule tout-terrain ;

traiter (32, 42) les signaux de détection pour déterminer des quantités dérivées ($E_{eng}$, $E_{losses}$, $E_k$, $E_p$) comprenant le traitement des quantités de moteur pour obtenir une première valeur d'une première quantité de puissance ($P_{eng,a}$) et traiter la vitesse et l'angle de pente pour obtenir une première valeur de la seconde quantité de puissance ($P_{losses,a}$) ;

traiter (34, 44-48) les quantités dérivées comprenant la vérification (34) pour savoir si la première valeur de la première quantité de puissance ($P_{eng,a}$) satisfait une première condition et comparer (34) la première valeur de la première quantité de puissance avec une quantité de puissance seuil ($P_{lim}$) ;

vérifier (34) que la première valeur de la première quantité de puissance est supérieure ou égale à la quantité de puissance seuil ($P_{lim}$) ; et répéter les étapes consistant à :

acquérir (30) les signaux de détection ($S_{1,a}$-$S_{4,a}$) ; traiter les quantités de moteur pour obtenir la première valeur d'une première quantité de puissance ($P_{eng,a}$) ;

traiter la vitesse et l'angle de pente pour obtenir une première valeur de la seconde quantité de puissance ($P_{losses,a}$) ;

comparer (34) la première valeur de la première quantité de puissance avec la quantité de puissance seuil ($P_{lim}$) ; et vérifier (34) que la première valeur de la première quantité de puissance est supérieure ou égale à la quantité de puissance seuil ($P_{lim}$),

jusqu'à ce que la première valeur de la première quantité de puissance soit supérieure ou égale à la quantité de puissance seuil ; déterminer (54) la masse du véhicule tout-terrain à partir des quantités dérivées ; et stocker (56) la masse du véhicule tout-terrain dans une mémoire, dans laquelle les quantités dérivées sont des quantités d'énergie ($E_{eng}$, $E_{losses}$, $E_k$, $E_p$).

2. - Procédé selon la revendication 1, dans lequel lesdites quantités d'énergie comprennent une première et une seconde quantité d'énergie liées au moteur ($E_{eng}$, $E_{losses}$), une énergie cinétique ($E_k$) et une énergie potentielle ($E_p$) du véhicule tout-terrain (1).

3. Procédé selon la revendication 1, dans lequel, si la première valeur de la première quantité de puissance ($P_{eng,a}$) est supérieure ou égale à la quantité de puissance seuil ($P_{lim}$), le procédé comprend en outre les étapes consistant à :

   acquérir (40) d'autres signaux de détection ($S_{1,b}$-$S_{4,b}$) à partir de la pluralité de capteurs (14, 14A-14D), les autres signaux de détection étant indicatifs d'autres valeurs de la vitesse ($v_b$), de l'angle de pente ($\alpha_b$) et des quantités du moteur ($M_{eng,b}$, $\omega_{eng,b}$), les autres valeurs de la vitesse, de l'angle de pente et des quantités de moteur étant mesurées pendant le mouvement du véhicule tout-terrain (1) ;
   traiter (42) les autres quantités de moteur pour obtenir une autre valeur d'une première quantité de puissance ($P_{eng,b}$) ;
   traiter (42) l'autre vitesse et l'autre angle de pente pour obtenir l'autre valeur de la seconde quantité de puissance ($P_{losses,b}$);
   déterminer (43) la première et une seconde quantité d'énergie ($E_{eng}$, $E_{losses}$) à partir de la première et des autres valeurs de la première et, respectivement, de la seconde quantité de puissance à partir du premier instant ;
   déterminer (43) une différence de hauteur ($\Delta h$) à partir de la première et des autres valeurs de l'angle de pente et de la vitesse à partir du premier instant ; et
   vérifier (44) si l'autre valeur de la première quantité de puissance ($P_{eng,b}$) satisfait la première condition.

4. Procédé selon la revendication 3, dans lequel la vérification (34) pour savoir si l'autre valeur de la première quantité de puissance ($P_{eng,b}$) satisfait la première condition comprend les étapes consistant à :

   comparer (44) l'autre valeur de la première quantité de puissance avec une quantité de puissance seuil ($P_{lim}$) ;
   vérifier (44) que l'autre valeur de la première quantité de puissance est supérieure à la quan-

tité de puissance seuil ($P_{lim}$) ; répétant les étapes consistant à :
   acquérir (40) d'autres signaux de détection ($S_{1,b}$- $S_{4,b}$) ;
   traiter (42) les autres quantités de moteur pour obtenir une autre valeur d'une première quantité de puissance ($P_{eng,b}$) ;
   traiter (42) l'autre vitesse et l'autre angle de pente pour obtenir l'autre valeur de la seconde quantité de puissance ($P_{losses,b}$) ;
   déterminer (43) la première et une seconde quantité d'énergie ($E_{eng}$, $E_{losses}$) à partir de la première et des autres valeurs de la première et, respectivement, de la seconde quantité de puissance à partir du premier instant ;
   déterminer (43) une différence de hauteur ($\Delta h$) à partir de la première et des autres valeurs de l'angle de pente et de la vitesse à partir du premier instant ;
   comparer (44) l'autre valeur de la première quantité de puissance avec la quantité de puissance seuil ($P_{lim}$) ; et vérifier (44) que l'autre valeur de la première quantité de puissance est supérieure à la quantité de puissance seuil ($P_{lim}$),
   jusqu'à ce que l'autre valeur de la première quantité de puissance soit inférieure à la quantité de puissance seuil.

5. Procédé selon la revendication 4, comprenant en outre le stockage de la première valeur et des autres valeurs de la vitesse pour déterminer une série de valeurs de vitesse si l'autre valeur de la première quantité de puissance est inférieure à la quantité de puissance seuil.

6. Procédé selon l'une quelconque des revendications 1 à 5, dans lequel la vérification (34) que la première valeur de la première quantité de puissance ($P_{eng,a}$) est supérieure à la quantité de puissance seuil est effectuée à un premier instant ($t_a$), dans lequel la vérification que l'autre valeur de la première quantité de puissance est inférieure à la quantité de puissance seuil est effectuée à un second instant (tb), successif au premier instant, le premier et le second instant étant stockés dans la mémoire (26) ; et dans lequel le procédé comprend en outre les étapes consistant à :

   acquérir (48) un intervalle de temps ($t_{ab}$) en tant que temps écoulé entre le premier et le second instant ;
   déterminer (48) l'énergie cinétique ($E_k$) à partir de la première et des autres valeurs de la vitesse dans l'intervalle de temps ;
   déterminer (49) la première et la seconde quantité d'énergie ($E_{eng}$, $E_{losses}$) et la différence de hauteur dans l'intervalle de temps ; et

déterminer (49) l'énergie potentielle ($E_p$) à partir de la différence de hauteur ($\Delta h$).

7. Procédé selon la revendication 6, comprenant en outre la vérification (50) que l'intervalle de temps ($t_{ab}$) satisfait une seconde condition.

8. Procédé selon la revendication 7, dans lequel la vérification (50) que l'intervalle de temps ($t_{ab}$) satisfait une seconde condition comprend les étapes consistant à :

    - comparer (50) l'intervalle de temps avec un intervalle de temps seuil ($t_{lim}$) ; et
    - vérifier (50) que l'intervalle de temps est supérieur à l'intervalle de temps seuil.

9. Procédé selon la revendication 8, dans lequel l'étape consistant à déterminer (54) la masse du véhicule tout-terrain comprend la division de la différence de la première et de la seconde quantité d'énergie ($E_{eng}$, $E_{losses}$) par la somme de l'énergie cinétique ($E_k$) et de l'énergie potentielle ($E_p$) déterminée dans l'intervalle de temps ($t_{ab}$).

10. Véhicule tout-terrain (1) comprenant :

    - un moteur à combustion (9) configuré pour entraîner le véhicule tout-terrain ;
    - une pluralité de capteurs (14, 14A-14D) configurés pour détecter une vitesse (v), un angle de pente (a) et des quantités de moteur ($M_{eng}$, $\omega_{eng}$) et pour générer des signaux de détection respectifs ($S_{1-S4}$), la vitesse, l'angle de pente et les quantités du moteur étant mesurés pendant le mouvement du véhicule tout-terrain lorsqu'il est entraîné par le moteur à combustion ; et
    - une unité de commande électronique, ECU, (10) couplée à la pluralité de capteurs et comprenant :
    - des moyens de réception (20) configurés pour recevoir les signaux de détection ($S_{1, a}$-$S_{4, a}$, $S_{1, b}$-$S_{4, b}$) ;
    - des premiers moyens de traitement (22) configurés pour traiter les signaux de détection afin de déterminer des quantités dérivées ($E_{eng}$, $E_{losses}$, $E_k$, $E_p$,) ;
    - des seconds moyens de traitement (22) configurés pour traiter les quantités dérivées selon l'une quelconque des revendications précédentes ;
    - des moyens de détermination (22) configurés pour déterminer une masse (m) du véhicule tout-terrain à partir des quantités dérivées ; et
    - une mémoire (26) configurée pour stocker la masse du véhicule tout-terrain.

# FIG. 1

# FIG. 2

# FIG. 3

START

ACQUIRE DATA — 30

DETERMINE $P_{eng}$ AND $P_{losses}$ — 32

$P_{eng} \geq P_{lim}$? — 34

NO / YES

MEMORIZE $t_a, v_a$ — 36

ACTIVATE INTEGRATORS — 38

ACQUIRE DATA — 40

DETERMINE $P_{eng}$ AND $P_{losses}$ — 42

DETERMINE $E_{eng}, E_{losses}$ AND $\Delta h$ FROM $t_a$ — 43

$P_{eng} \geq P_{lim}$? — 44

NO / YES

MEMORIZE $t_b, v_b$ — 46

DETERMINE $t_{ab}$ AND $E_k$ — 48

DETERMINE $E_{eng}, E_{losses}$ AND $E_p$ IN $t_{ab}$ — 49

$t_{ab} \geq t_{lim}$? — 50

NO / YES

RESET INTEGRATORS — 52

DETERMINE m — 54

MEMORIZE m — 56

RESET INTEGRATORS — 58

END

**EP 3 760 986 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013054107 A
- US 2014156222 A